# EUROPEAN PATENT APPLICATION

(11) **EP 3 399 058 A1**
(43) Date of publication of application: **07.11.2018**
(21) Application number: 15912124.3
(22) Date of filing: 30.12.2015
(51) Int. Cl.: C21D 8/12, C21D 10/00, B23K 26/352, B23K 26/354, B23K 26/364

(54) **METHOD FOR REFINING MAGNETIC DOMAIN OF GRAIN-ORIENTED ELECTRICAL STEEL SHEET, AND DEVICE THEREFOR**

(71) Applicant: Posco, Pohang-si, Gyeongsangbuk-do 37859 (KR)
(72) Inventor: HONG, Seong-Cheol, Pohang-si Gyeongsangbuk-do 37859 (KR); LIM, Choong Soo, Pohang-si Gyeongsangbuk-do 37859 (KR); KWON, Oh-Yeoul, Pohang-si Gyeongsangbuk-do 37859 (KR); CHUN, Myung-Sik, Pohang-si Gyeongsangbuk-do 37859 (KR); PARK, Hyun-Chul, Pohang-si Gyeongsangbuk-do 37859 (KR)
(74) Representative: Zech, Stefan Markus
(86) International application number: PCT/KR2015/014461
(87) International publication number: WO 2017/115888

(57) **Abstract**

Provided is a method and device for refining a magnetic domain of a grain-oriented electrical steel plate. The magnetic domain refining method of a grain-oriented electrical steel plate for stable permanent magnetic domain refining processing even if a steel plate is transferred at high speed of 2 m/s or more includes zigzag controlling for straightly transferring the steel plate without being inclined in right and left directions along a production line center, tension controlling for applying tension to the steel plate to maintain the steel plate in a flat state, steel plate support roll position adjusting for controlling a predetermined position of the steel plate in up and down directions while supporting the steel plate, and laser irradiating for irradiating a laser beam to melt the steel plate to form a groove in a surface of the steel plate.

## Description

### [Technical Field]

The present invention relates to a method and device for refining a magnetic domain of a grain-oriented electrical steel plate, and more particularly, a method and device for refining a magnetic domain of a grain-oriented electrical steel plate, for irradiating a laser beam to a surface of an electrical steel plate and melting the steel plate to form a groove and to permanently refining a magnetic domain of the electrical steel plate in order to reduce iron loss of the grain-oriented electrical steel plate used as an iron core of an electrical device such as a transformer.

### [Background Art]

In general, to reduce power loss of an electronic device such as a transformer and to improve efficiency of the electronic device, there is a need for a grain-oriented electrical steel plate with magnetic characteristics such as low iron loss and high magnetic flux density.

To improve iron loss characteristics of a grain-oriented electrical steel plate, various methods of reducing a magnetic domain width in a steel plate have been applied.

As a method of refining a magnetic domain, Japanese Patent Laid-Open Publication No. 58-26405 and US USP 4203784 disclose a method of refining a magnetic domain in a perpendicular direction to a rolling direction to reduce iron loss using a laser and mechanical method on a surface of a steel plate but the method of refining a magnetic flux using a laser on a surface of a steel plate disadvantageously has a magnetic domain refining effect after annealing for removing stress is performed.

A magnetic domain refining method is replaceable with a temporary magnetic domain refining method and a permanent magnetic domain refining method according to an effect for enhancing magnetic domain refinement is maintained via annealing for removing stress.

The temporary magnetic domain refining method includes a laser magnetic domain refining method, a ball scratch method, a plasma and ultrasonic wave method depending on an energy source for refining a magnetic domain, as disclosed in Japanese Patent Laid-Open Publication Nos. sho 57-2252B, sho 58-5968B, and hei 7-072300. A local compressive stress portion is formed on a surface of an electrical steel plate by performing a method using a laser, a ball, and a plasma and ultrasonic wave thereon to refine a magnetic domain.

However, since this method damages an insulating coating layer of a surface of a steel plate, re-coating need to be performed on the surface of the steel plate or magnetic domain refining processing needs to be performed in an intermediate process, but not on a final product and, thus, manufacturing costs are disadvantageously increased. To adjust a compress strain layer region of the electrical steel plate, input energy value needs to be increased. Accordingly, to improve an iron loss improvement rate of a final product, surface damage is disadvantageously inevitable during magnetic domain refining processing.

The permanent magnetic domain refining method for maintaining an iron loss improvement effect even after heat treatment broadly includes an etching method, a rolling method, and a laser method. As the etching method, Japanese Patent Laid-Open Publication No. hei 6-57857 discloses a method including masking a surface of an electrical steel plate with a photosensitive resin, detaching the surface resin using photo etching or a method using a laser or plasma and, then, forming a groove with a width of 5 to 300 µm and a depth of 100 µm in the surface of the electrical steel plate by performing an electrochemical method in a solution.

In the etching method, since a groove is formed in a surface of an electrical steel plate via an electrochemical corrosion reaction in an acid solution, it is difficult to control a groove shape (width and depth) and, since the groove is formed in an intermediate process (prior to decarbonization annealing and high-temperature annealing) for producing an electrical steel plate, it is difficult to ensure loss iron characteristics of a final product and, since an acid solution is used, the method is not disadvantageously environmentally friendly.

As the permanent magnetic domain refining method using a roll, Japanese Patent Laid-Open Publication No. 5-202450 discloses a method including pressurizing an electrical steel plate using a roll, a surface of which is processed to protrude, to form a groove with a width of 300 µm or less and a depth of 5 µm in a surface.

The permanent magnetic domain refining method using a roll is a technology for refining a magnetic domain by performing permanent magnetic domain refining processing and, then, annealing an electrical steel plate to generate re-crystallization below the groove and disadvantageously has complex stability and reliability of mechanical processing and a complex process. Japanese Patent Laid-Open Publication No. hei 6-63037 discloses a method of forming a groove with a depth of 5 µm at a line interval of 1 to 30 mm in a surface of an electrical steel plate via a press, similar to the method of forming a groove using a roll.

EP 0 870843 A1 (WO 97/024466) discloses a permanent magnetic domain refining method of forming a groove having a surface opening with a width of 100 to 300 µm and a depth of 10 to 30 µm via deposition of a material of an irradiated portion via irradiation of a pulse laser to ensure an iron loss improvement rate of 14% after heat treatment of a grain-oriented electrical steel plate with a thickness of 0.23 mm, and Japanese Patent Application No. 1998-284034 discloses a method of improving iron loss characteristics after heat treatment via a Q switch pulse laser, for forming grooves with a depth of 5 to 30 µm in opposite surfaces of an electrical steel plate to ensure an iron loss improvement rate of 4.7 to 5.1% after heat treatment.

In a known magnetic domain refining method using a pulse laser, a groove is formed via deposition and, thus, formation of a melted portion is suppressed, it is difficult to ensure an iron loss improvement rate prior to heat treatment (stress relaxation heat treatment, SRA), only a magnetic domain refining effect via a simple groove is maintained after heat treatment, and conveying speed of a steel plate is not disadvantageously capable of being processed at high speed (line speed of 10 mpm or more).

### [DISCLOSURE]

### [Technical Problem]

The present invention has been made in an effort to provide a method and device for refining a magnetic domain of a grain-oriented electrical steel plate, for irradiating a single mode consecutive wave laser beam to a grain-oriented electrical steel plate surface to form a groove having an upper width within 70 µm, a lower width within 10 µm, and a depth of 2 to 30 µm, simultaneously, forming a re-solidified portion accumulating on an internal wall of the groove of a melted portion during laser beam irradiation to ensure an iron loss improvement rate after and before heat treatment to 5% or more and 10% or more, respectively, and adjusting a laser irradiation line interval to 2 to 30 mm in a rolling direction to minimize influence of a heat affected zone (HAZ) due to a laser beam and to improve iron loss characteristics of the steel plate.

### [Technical Solution]

An exemplary embodiment of the present invention provides a magnetic domain refining method of a grain-oriented electrical steel plate for stable permanent magnetic domain refining processing even if a steel plate is transferred at high speed of 2 m/s or more, the method including
zigzag controlling for straightly transferring the steel plate without being inclined in right and left directions along a production line center,
tension controlling for applying tension to the steel plate to maintain the steel plate in a flat state,
steel plate support roll position adjusting for controlling a predetermined position of the steel plate in up and down directions while supporting the steel plate, and
laser irradiating for irradiating a laser beam to melt the steel plate to form a groove in a surface of the steel plate.

According to another embodiment of the present invention, a magnetic domain refining method of a grain-oriented electrical steel plate for stable permanent magnetic domain refining processing even if a steel plate is transferred at high speed of 2 m/s or more, the method including
tension controlling for applying tension to the steel plate to maintain the steel plate in a flat state,
steel plate support roll position adjusting for controlling a predetermined position of the steel plate in up and down directions while supporting the steel plate, and
laser irradiating for irradiating a laser beam to melt the steel plate to form a groove in a surface of the steel plate.

The zigzag controlling may include zigzag degree measuring for measuring a zigzag degree by which a central position of the steel plate deviates from a production line center in a width direction prior to groove formation via a zigzag measuring sensor to form the groove over an entire width of the steel plate in a previous process of formation of a groove in a surface of the steel plate via laser irradiation, and
zigzag degree controlling for rotating and moving an axis of steering rolls to adjust a direction in which the steel plate is transferred, depending on a zigzag degree of the steel plate measured in the zigzag degree measuring, to control the zigzag degree of the steel plate within ±1 mm.

The tension controlling may include steel plate applying for applying tension with a predetermined size to the steel plate by tension bridle rolls to perform work with steel plate tension within a range of 1 to 4 kgf/mm²,
steel plate tension measuring for measuring tension of the steel plate on which the steel plate applying is performed, by a tension measuring sensor, and
stripe tension controlling for adjusting speed of the tension bridle rolls depending on the tension of the steel plate measured in the steel plate tension measuring to control tension error of the steel plate within ±1 %.

The steel plate support roll position adjusting may include steel plate supporting for supporting the steel plate in the laser irradiating by a steel plate support roll,
brightness measuring for measuring brightness of flame generated when a laser beam is irradiated to the steel plate in the laser irradiating by a brightness measuring sensor, and
steel plate support roll position controlling for adjusting a position of a steel plate support roll (SPR) by the steel plate support roll (SPR) position control system to control the SPR position control accuracy within ±10 µm to achieve flame brightness in a best state depending on the brightness of the flame measured in the brightness measuring.

The laser irradiating may include laser irradiation and energy transmitting for irradiating a laser beam emitted from the laser oscillator to a surface of a steel plate by an optical system for receiving the laser beam to form a groove having an upper width within 70 µm, a lower width within 10 µm, and a depth of 3 to 30 µm and, simultaneously, transferring laser beam energy density in the range of 1.0 to 5.0 J/mm² required to melt a steel plate to the steel plate to produce a re-solidified portion accumulating on an internal wall of the groove of a melted portion during laser beam irradiation.

The laser irradiating may include laser beam oscillation controlling S41 for controlling a laser oscillator 13 in an on state for oscillation of a laser beam in a normal work condition by a laser oscillator controller 12 and controlling a laser oscillator 13 in an off state when a zigzag degree of a steel plate is 15 mm or more.

After the tension controlling is performed, steel plate transferring direction converting for changing a transferring direction of the steel plate toward a steel plate support roll via deflector rolls may be performed.

In the laser irradiating, a laser oscillator may oscillate a single mode consecutive wave laser beam.

In the laser irradiating, an optical system may control laser scanning speed to adjust a laser beam irradiation line interval to 2 to 30 mm in a rolling direction.

According to another embodiment of the present invention, a magnetic domain refining device of a grain-oriented electrical steel plate for stable permanent magnetic domain refining processing even if a steel plate is transferred at high speed of 2 m/s or more, the device including
zigzag control equipment for straightly transferring the steel plate without being inclined in right and left directions along a production line center,
tension control equipment for applying tension to the steel plate to maintain the steel plate in a flat state,
steel plate support roll position adjusting equipment for controlling a predetermined position of the steel plate in up and down directions while supporting the steel plate, and
laser irradiating equipment for irradiating a laser beam to melt the steel plate to form a groove in a surface of the steel plate.

According to another embodiment of the present invention, a magnetic domain refining device of a grain-oriented electrical steel plate for stable permanent magnetic domain refining processing even if a steel plate is transferred at high speed of 2 m/s or more, the device including
tension control equipment for applying tension to the steel plate to maintain the steel plate in a flat state,
steel plate support roll position adjusting equipment for controlling a predetermined position of the steel plate in up and down directions while supporting the steel plate, and
laser irradiating equipment for irradiating a laser beam to melt the steel plate to form a groove in a surface of the steel plate.

The zigzag control equipment may include steering rolls for changing a transferring direction of the steel plate,
a stripe center position control system for rotating and moving an axis of the steering rolls to adjust a direction in which the steel plate is transferred, and
a zigzag measuring sensor for measuring a degree (zigzag degree) by which a central position of the steel plate deviates from a production line center in a width direction.
the tension control equipment may include tension bridle rolls (TBRs) for guiding transferring while applying tension with predetermined amplitude to the steel plate,
a steel plate tension measuring sensor for measuring tension of the steel plate passed through the tension bridle roll, and
a stripe tension control system for adjusting speed of the tension bridle rolls depending on tension of the steel plate measured by the steel plate tension measuring sensor.

The steel plate support roll position adjusting equipment may include a steel plate support roll (SPR) for supporting the steel plate at a position of the laser irradiation equipment,
a brightness measuring sensor for measuring brightness of flame generated when a laser beam is irradiated to the steel plate by the laser irradiation equipment, and
an SPR position control system for controlling a position of the steel plate support roll depending on the brightness of the flame measured by the brightness measuring sensor.

The laser irradiation equipment may include a laser oscillator for oscillating a consecutive wave laser beam, and
an optical system for irradiating a laser beam oscillated by the laser oscillator to a surface of the steel plate to form a groove with an upper width within 70 µm, a lower width within 10 µm, and a depth of 3 to 30 µm and, simultaneously, transferring laser energy density in the range of 1.0 to 5.0 J/mm² required to melt the steel plate to the steel plate to produce a re-solidified portion accumulating on an internal wall of the groove of a melted portion during laser irradiation.

The laser irradiation equipment may include a laser oscillator controller 12 for controlling a laser oscillator in an on state in a normal work condition and controlling the laser oscillator in an off state when a steel plate zigzag degree is 15 mm or more.

A transferring direction of the steel plate passed through the tension control equipment may be changed in a direction toward the steel plate support roll from the steel plate by deflector rolls.

The laser oscillator may oscillate a single mode consecutive wave laser beam.

The optical system may control laser scanning speed to adjust a laser beam irradiation line interval to 2 to 30 mm in a rolling direction.

### [Advantageous Effects]

According to exemplary embodiments of the present invention, even if steel plate is transferred at high speed of 2 m/s or more, a groove with an upper width within 70 µm, a lower width within 10 µm, and a depth of 3 to 30 µm may be stably formed in the steel plate every interval of 3 to 30 mm in a length direction to advantageously apply the embodiments to an electrical steel plate prior to primary re-crystallization and ensure an iron loss improvement rate to 5% or more and 10% or more before and after heat treatment of an electrical steel plate after secondary re-crystallization or insulating coating and, thus, the steel plate may be used as a wound core that requires heat treatment, and a metal pin of a hematite transformer which does not require heat treatment.

### [Description of the Drawings]

FIG. 1 is a schematic diagram showing a magnetic domain refining method of a grain-oriented electrical steel plate according to an embodiment of the present invention.
FIG. 2 is a schematic diagram of a magnetic domain refining device of a grain-oriented electrical steel plate according to an embodiment of the present invention.
FIG. 3 is a schematic diagram of a steel plate having consecutive grooves formed by a consecutive wave laser beam according to an embodiment of the present invention.

### [Mode for Invention]

Exemplary embodiments of the present invention are described in detail so as for those of ordinary skill in the art to easily implement with reference to the accompanying drawings. As easily understood by one of ordinary skill in the art of the present invention, the following embodiments are modified in various forms without departing from the spirit and scope of the present invention. The same reference numeral refers to the same or like elements if possible throughout.

The technical terms used herein are used only for stating a specific embodiment and are not intended to limit the present invention. As used herein, the singular forms are intended to include the plural forms as well, unless the context clearly indicates otherwise. The term "comprises", "includes", or "has" described herein specifies specific characteristic, region, integer, step, operation, element, and/or component and should be interpreted not to exclude presence or addition of specific characteristic, region, integer, step, operation, element, component and/or group.

All terms including technical or scientific terms have the same meanings as generally understood by a person having ordinary skill in the art to which the present invention pertains unless mentioned otherwise. Pre-defined terms are additionally interested as having the meaning corresponding to related technical documents and currently disclosed information and are not interpreted in an ideal or excessively formal manner unless differently defined in the present invention.

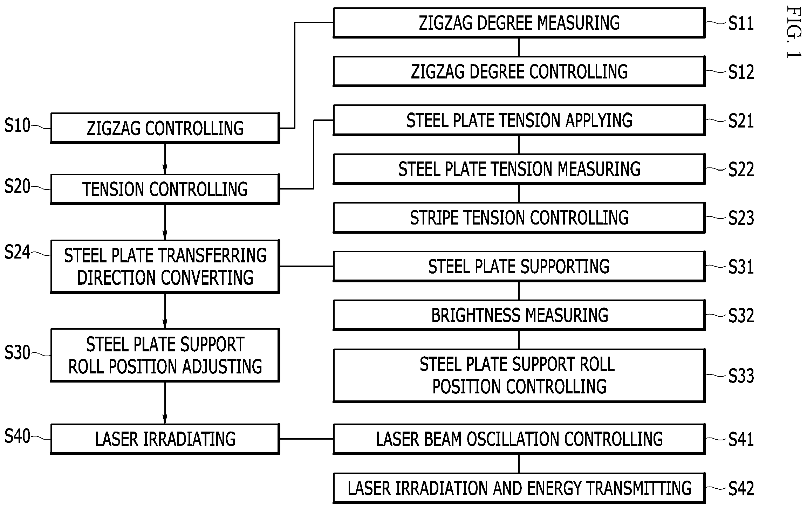

FIG. 1 is a schematic diagram showing a magnetic domain refining method of a grain-oriented electrical steel plate according to an embodiment of the present invention.

Referring to FIG. 1, the magnetic domain refining method of a grain-oriented electrical steel plate according to an embodiment of the present invention is a method for stable permanent magnetic domain refining processing even if a steel plate 1 is transferred at high speed of 2 m/s or more and may include
zigzag controlling S10 for straightly transferring the steel plate 1 without being inclined in right and left directions along a production line center,
tension controlling S20 for applying tension to the steel plate 1 to maintain the steel plate 1 in a flat state,
steel plate support roll position adjusting S30 for controlling a predetermined position of the steel plate 1 in up and down directions while supporting the steel plate 1, and
laser irradiating S40 for irradiating a laser beam to melt the steel plate 1 to form a groove in a surface of the steel plate 1.

The zigzag controlling S10 may include zigzag degree measuring S11 for measuring a zigzag degree by which a central position of the steel plate 1 deviates from a production line center in a width direction prior to groove formation via a zigzag measuring sensor 4 to form the groove over an entire width of the steel plate 1 in a previous process of formation of a groove in a surface of the steel plate via laser irradiation, and
zigzag degree controlling S12 for rotating and moving an axis of a steering rolls (SRs) 2A and 2B to adjust a direction in which the steel plate 1 is transferred, depending on a zigzag degree of the steel plate 1 measured in the zigzag degree measuring S11, to control the zigzag degree of the steel plate 1 within ±1 mm.
the tension controlling S20 may include steel plate tension applying S21 for applying tension with a predetermined size to the steel plate 1 by tension bridle rolls 5A and 5B to perform work with steel plate tension within a range of 1 to 4 kgf/mm²,
steel plate tension measuring S22 for measuring tension of the steel plate 1, on which the steel plate tension applying S21 is performed, by a tension measuring sensor 7, and
stripe tension controlling S23 for adjusting speed of the tension bridle rolls 5A and 5B depending on the tension of the steel plate 1 measured in the steel plate tension measuring S22 to control tension error of the steel plate 1 within ±1%.

After the tension controlling S20 is performed, steel plate transferring direction converting S24 for changing a transferring direction of the steel plate 1 toward a steel plate support roll 9 via deflector rolls 8A and 8B may be performed.

The steel plate support roll position adjusting S30 may include steel plate supporting S31 for supporting the steel plate 1 in the laser irradiating S40 by a steel plate support roll 9,
brightness measuring S32 for measuring brightness of flame generated when a laser beam is irradiated to the steel plate 1 in the laser irradiating S40 by a brightness measuring sensor 10, and
steel plate support roll position controlling S33 for adjusting a position of the steel plate support roll 9 by a steel plate support roll (SPR) position control system 11 to control the SPR position control accuracy within ±10 µm to achieve flame brightness in a best state depending on the brightness of the flame measured in the brightness measuring S32.

In the steel plate support roll position adjusting S30, the steel plate 1 may be supported at a laser irradiated portion by the steel plate support roll 9 and a position of the steel plate support roll may be adjusted to achieve a best state of brightness of flame generated while a laser beam is irradiated to the steel plate to allow the steel plate to be positioned in a depth of focus with high laser steel plate irradiation efficiency. The brightness of flame generated while a laser beam is irradiated onto the steel plate may be measured by the brightness measuring sensor 10 and SPR position control accuracy may be controlled within ±10 µm.

The laser irradiating 40 may include laser beam oscillation controlling S41 for controlling a laser oscillator 13 in an on state for oscillation of a laser beam in a normal work condition by a laser oscillator controller 12 and controlling a laser oscillator 13 in an off state when a zigzag degree of a steel plate is 15 mm or more, and
laser irradiation and energy transmitting S42 for irradiating a laser beam emitted from the laser oscillator 13 to a surface of a steel plate by an optical system 14 for receiving the laser beam to form a groove having an upper width within 70 µm, a lower width within 10 µm, and a depth of 3 to 30 µm and, simultaneously, transferring laser beam energy density in the range of 1.0 to 5.0 J/mm² required to melt a steel plate to the steel plate to produce a re-solidified portion accumulating on an internal wall of the groove of a melted portion during laser beam irradiation.

In the laser irradiating S40, a laser oscillator may be controlled in an on state in a normal work condition and controlled in an off state when a steel plate zigzag degree is 15 mm or more, a laser beam may be irradiated to a surface of the steel plate to form a groove having an upper width within 70 µm, a lower width within 10 µm, and a depth of 3 to 30 µm and, simultaneously, laser beam energy density in the range of 1.0 to 5.0 J/mm² required to melt a steel plate may be transferred to the steel plate to produce a re-solidified portion accumulating on an internal wall of the groove of a melted portion during laser beam irradiation.

In the laser irradiating S40, the laser oscillator 13 may oscillate a single mode consecutive wave laser beam 15.

In the laser irradiating S40, the optical system 14 may control laser scanning speed to adjust a laser beam irradiation line interval to 2 to 30 mm in a rolling direction.

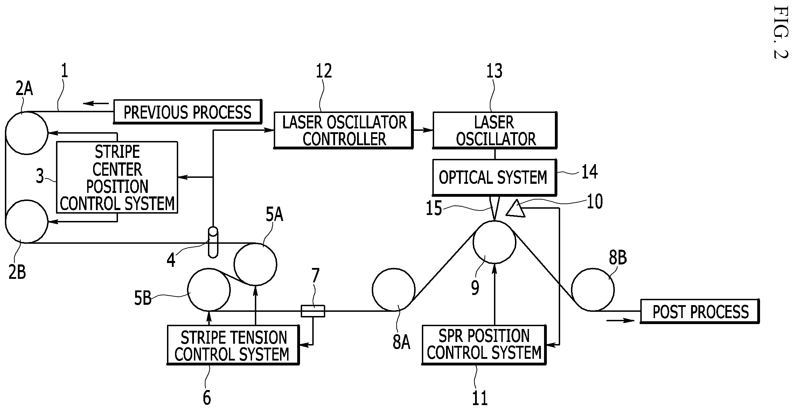

FIG. 2 is a schematic diagram of a magnetic domain refining device of a grain-oriented electrical steel plate according to an embodiment of the present invention.

Referring to FIG. 2, the magnetic domain refining device of a grain-oriented electrical steel plate according to an embodiment of the present invention is a device for stable permanent magnetic domain refining processing even if the steel plate 1 is transferred at high speed of 2 m/s or more and may include
zigzag control equipment for straightly transferring the steel plate 1 without being inclined in right and left directions along a production line center,
tension control equipment for applying tension to the steel plate 1 to maintain the steel plate 1 in a flat state,
steel plate support roll position adjusting equipment for controlling a predetermined position of the steel plate 1 in up and down directions while supporting the steel plate 1,
laser irradiating equipment for irradiating a laser beam 15 to melt the steel plate 1 to form a groove in a surface of the steel plate 1, and so on.

The zigzag control equipment may include steering rolls 2A and 2B for changing a transferring direction of the steel plate 1,
a stripe center position control system 3 for rotating and moving an axis of steering rolls (SRs) 2A and 2B to adjust a direction in which the steel plate 1 is transferred, and
a zigzag measuring sensor 4 for measuring a degree (zigzag degree) by which a central position of the steel plate 1 deviates from a production line center in a width direction.

The zigzag control equipment may rotate and transfer an axis of the steering rolls 2A and 2B depending to a zigzag degree measured by the zigzag measuring sensor 4 prior to groove formation via the zigzag measuring sensor 4 to form the groove over an entire width of the steel plate 1 in a previous process of formation of a groove in a surface of the steel plate via laser irradiation to adjust a transferring direction of the steel plate and to control a zigzag degree of the steel plate 1 within ±1 mm.
the tension control equipment may include tension bridle rolls (TBRs) 5A and 5B for guiding transferring while applying tension with predetermined amplitude to the steel plate 1,
a steel plate tension measuring sensor 7 for measuring tension of the steel plate 1 passed through the tension bridle roll, and
a stripe tension control system 6 for adjusting speed of the tension bridle rolls 5A and 5B depending on tension of the steel plate 1 measured by the steel plate tension measuring sensor 7.

The tension control equipment may adjust speed of the tension bridle rolls (TBRs) 5A and 5B by the stripe tension control system 6 depending on tension of a steel plate measured by steel plate tension measuring sensor 7 to control tension error of the steel plate 1 within ±1% to perform work with steel plate tension within a range of 1 to 4 kgf/mm².

A transferring direction of the steel plate passed through the tension control equipment may be changed in a direction toward the steel plate support roll 9 from the steel plate 1 by deflector rolls 8A and 8B.
the steel plate support roll position adjusting equipment may include a steel plate support roll (SPR) 9 for supporting the steel plate 1 at a position of the laser irradiation equipment,
the brightness measuring sensor 10 for measuring brightness of flame generated when a laser beam is irradiated to the steel plate 1 by the laser irradiation equipment, and
the SPR position control system 11 for controlling a position of the steel plate support roll 9 depending on the brightness of the flame measured by the brightness measuring sensor 10.

The steel plate support roll position adjusting equipment may adjust a position of the steel plate support roll 9 to achieve a best state of brightness of the flame generated while a laser beam is irradiated to a steel plate to support the steel plate 1 at the laser irradiation portion by steel plate support roll 9 and to position the steel plate in a depth of focus with high laser steel plate irradiation efficiency. The brightness of the flame generated while a laser beam is irradiated to the steel plate may be measured by the brightness measuring sensor 10 and SPR position control accuracy may be controlled within ±10 µm.

The laser irradiation equipment may include a laser oscillator controller 12 for controlling a laser oscillator in an on state in a normal work condition and controlling the laser oscillator in an off state when a steel plate zigzag degree is 15 mm or more,
the laser oscillator 13 for oscillating a consecutive wave laser beam 15, and
the optical system 14 for irradiating a laser beam oscillated by the laser oscillator 13 to a surface of the steel plate 1 to form a groove with an upper width within 70 µm, a lower width within 10 µm, and a depth of 3 to 30 µm and, simultaneously, transferring laser energy density in the range of 1.0 to 5.0 J/mm² required to melt the steel plate to the steel plate to produce a re-solidified portion accumulating on an internal wall of the groove of a melted portion during laser irradiation.

The laser irradiation equipment may control the laser oscillator in an on state in a normal work condition and control the laser oscillator in an off state when a steel plate zigzag degree is 15 mm or more, may irradiate a laser beam to a surface of the steel plate to form a groove having an upper width within 70 µm, a lower width within 10 µm, and a depth of 3 to 30 µm and, simultaneously, may transfer laser beam energy density in the range of 1.0 to 5.0 J/mm² required to melt a steel plate to the steel plate to produce a re-solidified portion accumulating on an internal wall of the groove of a melted portion during laser beam irradiation.

The laser oscillator 13 may oscillate a single mode consecutive wave laser beam 15 and may transmit the single mode consecutive wave laser beam 15 to the optical system 14.

The optical system 14 may control laser scanning speed to adjust a laser beam irradiation line interval to 2 to 30 mm in a rolling direction.

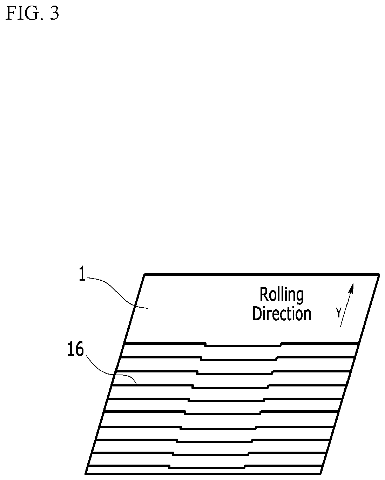

FIG. 3 is a schematic diagram of a steel plate having consecutive grooves formed by a consecutive wave laser beam according to an embodiment of the present invention.

In FIG. 3, reference numeral 16 refers to a laser groove irradiation line.

Hereinafter, an operation of a magnetic domain refining device of a grain-oriented electrical steel plate according to an embodiment of the present invention is described with reference to FIGS. 2 and 3.

The magnetic domain refining device of a grain-oriented electrical steel plate according to an embodiment of the present invention may include zigzag control equipment for straightly transferring the steel plate 1 without being inclined in right and left directions along a production line center to perform stable permanent magnetic domain refining processing even if the steel plate 1 is transferred at high speed of 2 m/s or more, tension control equipment for applying tension to the steel plate 1 to maintain the steel plate 1 in a flat state, steel plate support roll position adjusting equipment for controlling a predetermined position of the steel plate 1 in up and down directions while supporting the steel plate 1, laser irradiating equipment for irradiating a laser beam to melt the steel plate 1 to form a groove in a surface of the steel plate 1, and so on.

The zigzag control equipment may rotate and transfer an axis of the steering rolls 2A and 2B by the stripe center position control system 3 depending on a zigzag degree which is measured by the zigzag measuring sensor 4 and by which a central position of the steel plate 1 deviates from a production line center in a width direction to adjust a transferring direction of the steel plate 1 and to control a zigzag degree of the steel plate 1 within ±1 mm.

Tension of the steel plate may be set in the range of 1 to 4 kgf/mm² to prevent a plate wave end due to an excessive amplitude of tension while planarizing a surface shape of the steel plate at a position of the laser irradiation equipment.

The tension control equipment may adjust speed of the tension bridle rolls (TBRs) 5A and 5B by the stripe tension control system 6 depending on tension of the steel plate measured by the steel plate tension measuring sensor 7 to perform work with predetermined tension to control tension error of the steel plate 1 within ±1%.

The steel plate support roll 9 may support the steel plate 1 at a position of the laser irradiation equipment and steel plate support roll position adjusting equipment may adjust a position of the steel plate support roll 9 to achieve a best state of brightness of flame generated while a laser beam is irradiated to the steel plate 1 by the SPR position control system 11 to allow the steel plate to be positioned in a depth of focus with high laser steel plate irradiation efficiency. Flame brightness may be measured using the brightness measuring sensor 10 and SPR position control accuracy may be maintained within ±10 µm.

As described above, the zigzag control equipment, the tension control equipment, and the steel plate support roll position adjusting equipment may make a steel plate condition at a laser irradiation position for accurately forming a laser groove in the steel plate by the laser irradiation equipment. A central position of the steel plate at the laser irradiation position needs to be positioned a production line center and a distance of the steel plate from the optical system 14 needs to be maintained as a predetermined value.

The laser irradiation equipment may include the laser oscillator controller 12, the laser oscillator 13, and the optical system 14. When a zigzag degree of the steel plate is excessive, the steel plate deviates from the laser irradiation position, a laser beam may be irradiated to the steel plate support roll 9 to damage a roll. To prevent the roll from being damaged, when a zigzag degree is equal to or greater than 15 mm, the laser oscillator controller may control the laser oscillator in an off state. A laser beam may be irradiated to a surface of the steel plate to form a groove having an upper width within 70 µm, a lower width within 10 µm, and a depth of 3 to 30 µm and, simultaneously, the laser oscillator 13 and the optical system 14 may transfer laser beam energy density in the range of 1.0 to 5.0 J/mm² required to melt a steel plate to the steel plate to produce a re-solidified portion accumulating on an internal wall of the groove of a melted portion during laser beam irradiation. The laser oscillator 13 may oscillate a single mode consecutive wave laser beam and transmit the laser beam to the optical system 14, and the optical system 14 may irradiate a laser beam to a surface of the steel plate.

In addition, an optical system may have a function for controlling laser scanning speed to adjust a laser beam irradiation line interval to 2 to 30 mm in a rolling direction to minimize influence of a heat affected zone (HAZ) due to a laser beam and to improve iron loss characteristics of the steel plate.

As described above, to perform stable permanent magnetic domain refining processing even if the steel plate 1 is transferred at high speed of 2 m/s or more, the zigzag control equipment, the tension control equipment, and the steel plate support roll position adjusting equipment may make a steel plate condition at a laser irradiation position to accurately form a laser groove in a steel plate by the laser irradiation equipment. The laser oscillator and the optical system may transmit laser energy density in the range of 1.0 to 5.0 J/mm² required to melt the steel plate to the steel plate 1 to form a groove having an upper width within 70 µm, a lower width within 10 µm, and a depth of 3 to 30 µm. The optical system may have a function of controlling laser scanning speed to adjust a laser irradiation line interval to 2 to 30 mm in a rolling direction.

Table 1 below shows an iron loss improvement rate of a grain-oriented electrical steel plate by a groove formed in a surface of a steel plate with a thickness of 0.27 mm via consecutive wave laser beam irradiation according to an embodiment of the present invention.

**Table 1**

| Iron loss improvement rate (%) | |
|---|---|
| After irradiation | After heat treatment |
| 9.5 | 11.6 |
| 9.7 | 12.9 |
| 11.5 | 13.5 |
| 8.4 | 11.6 |
| 8.6 | 11.8 |
| 8.5 | 11.7 |

## Claims

1. A magnetic domain refining method of a grain-oriented electrical steel plate for stable permanent magnetic domain refining processing even if a steel plate is transferred at high speed of 2 m/s or more, the method comprising:
zigzag controlling for straightly transferring the steel plate without being inclined in right and left directions along a production line center;
tension controlling for applying tension to the steel plate to maintain the steel plate in a flat state;
steel plate support roll position adjusting for controlling a predetermined position of the steel plate in up and down directions while supporting the steel plate; and
laser irradiating for irradiating a laser beam to melt the steel plate to form a groove in a surface of the steel plate.

2. A magnetic domain refining method of a grain-oriented electrical steel plate for stable permanent magnetic domain refining processing even if a steel plate is transferred at high speed of 2 m/s or more, the method comprising:
tension controlling for applying tension to the steel plate to maintain the steel plate in a flat state;
steel plate support roll position adjusting for controlling a predetermined position of the steel plate in up and down directions while supporting the steel plate; and
laser irradiating for irradiating a laser beam to melt the steel plate to form a groove in a surface of the steel plate.

3. The method of claim 1, wherein
the zigzag controlling includes:
zigzag degree measuring for measuring a zigzag degree by which a central position of the steel plate deviates from a production line center in a width direction prior to groove formation via a zigzag measuring sensor to form the groove over an entire width of the steel plate in a previous process of formation of a groove in a surface of the steel plate via laser irradiation; and
zigzag degree controlling for rotating and moving an axis of steering rolls to adjust a direction in which the steel plate is transferred, depending on a zigzag degree of the steel plate measured in the zigzag degree measuring, to control the zigzag degree of the steel plate within ±1 mm.

4. The method of any one of claims 2 and 3, wherein
the tension controlling includes:
steel plate applying for applying tension with a predetermined size to the steel plate by tension bridle rolls to perform work with steel plate tension within a range of 1 to 4 kgf/mm²;
steel plate tension measuring for measuring tension of the steel plate on which the steel plate applying is performed, by a tension measuring sensor; and
stripe tension controlling for adjusting speed of the tension bridle rolls depending on the tension of the steel plate measured in the steel plate tension measuring to control tension error of the steel plate within ±1%.

5. The method of claim 4, wherein
the steel plate support roll position adjusting includes:
steel plate supporting for supporting the steel plate in the laser irradiating by a steel plate support roll;
brightness measuring for measuring brightness of flame generated when a laser beam is irradiated to the steel plate in the laser irradiating by a brightness measuring sensor; and
steel plate support roll position controlling for adjusting a position of a steel plate support roll (SPR) by the steel plate support roll (SPR) position control system to control the SPR position control accuracy within ±10 µm depending on the brightness of the flame measured in the brightness measuring.

6. The method of claim 5, wherein
the laser irradiating includes laser irradiation and energy transmitting for irradiating a laser beam emitted from the laser oscillator to a surface of a steel plate by an optical system for receiving the laser beam to form a groove having an upper width within 70 µm, a lower width within 10 µm, and a depth of 3 to 30 µm and, simultaneously, transferring laser beam energy density in the range of 1.0 to 5.0 J/mm² required to melt a steel plate to the steel plate to produce a re-solidified portion accumulating on an internal wall of the groove of a melted portion during laser beam irradiation.

7. The method of claim 6, wherein
the laser irradiating includes laser beam oscillation controlling S41 for controlling a laser oscillator 13 for oscillation of a laser beam in a normal work condition by a laser oscillator controller 12 in an on state and controlling a laser oscillator 13 in an off state when a zigzag degree of a steel plate is 15 mm or more.

8. The method of claim 5, wherein,
after the tension controlling is performed, steel plate transferring direction converting for changing a transferring direction of the steel plate toward a steel plate support roll via deflector rolls is performed.

9. The method of claim 7, wherein,
in the laser irradiating, a laser oscillator oscillates a single mode consecutive wave laser beam.

10. The method of claim 9, wherein,
in the laser irradiating, an optical system controls laser scanning speed to adjust a laser beam irradiation line interval to 2 to 30 mm in a rolling direction.

11. A magnetic domain refining device of a grain-oriented electrical steel plate for stable permanent magnetic domain refining processing even if a steel plate is transferred at high speed of 2 m/s or more, the device comprising:
zigzag control equipment for straightly transferring the steel plate without being inclined in right and left directions along a production line center;
tension control equipment for applying tension to the steel plate to maintain the steel plate in a flat state;
steel plate support roll position adjusting equipment for controlling a predetermined position of the steel plate in up and down directions while supporting the steel plate; and
laser irradiating equipment for irradiating a laser beam to melt the steel plate to form a groove in a surface of the steel plate.

12. A magnetic domain refining device of a grain-oriented electrical steel plate for stable permanent magnetic domain refining processing even if a steel plate is transferred at high speed of 2 m/s or more, the device comprising:
tension control equipment for applying tension to the steel plate to maintain the steel plate in a flat state;
steel plate support roll position adjusting equipment for controlling a predetermined position of the steel plate in up and down directions while supporting the steel plate; and
laser irradiating equipment for irradiating a laser beam to melt the steel plate to form a groove in a surface of the steel plate.

13. The device of claim 11, wherein
the zigzag control equipment includes:
steering rolls for changing a transferring direction of the steel plate;
a stripe center position control system for rotating and moving an axis of the steering rolls to adjust a direction in which the steel plate is transferred; and
a zigzag measuring sensor for measuring a degree (zigzag degree) by which a central position of the steel plate deviates from a production line center in a width direction.

14. The device of any one of claims 12 and 13, wherein
the tension control equipment includes:
tension bridle rolls (TBRs) for guiding transferring while applying tension with predetermined amplitude to the steel plate;
a steel plate tension measuring sensor for measuring tension of the steel plate passed through the tension bridle roll; and
a stripe tension control system for adjusting speed of the tension bridle rolls depending on tension of the steel plate measured by the steel plate tension measuring sensor.

15. The device of claim 14, wherein
the steel plate support roll position adjusting equipment includes:
a steel plate support roll (SPR) for supporting the steel plate at a position of the laser irradiation equipment;
a brightness measuring sensor for measuring brightness of flame generated when a laser beam is irradiated to the steel plate by the laser irradiation equipment; and
an SPR position control system for controlling a position of the steel plate support roll depending on the brightness of the flame measured by the brightness measuring sensor.

16. The device of claim 15, wherein
the laser irradiation equipment includes:
a laser oscillator for oscillating a consecutive wave laser beam; and
an optical system for irradiating a laser beam oscillated by the laser oscillator to a surface of the steel plate to form a groove with an upper width within 70 µm, a lower width within 10 µm, and a depth of 3 to 30 µm and, simultaneously, transferring laser energy density in the range of 1.0 to 5.0 J/mm² required to melt the steel plate to the steel plate to produce a re-solidified portion accumulating on an internal wall of the groove of a melted portion during laser irradiation.

17. The device of claim 16, wherein
the laser irradiation equipment includes a laser oscillator controller 12 for controlling a laser oscillator in an on state in a normal work condition and controlling the laser oscillator in an off state when a steel plate zigzag degree is 15 mm or more.

18. The device of claim 15, wherein
a transferring direction of the steel plate passed through the tension control equipment is changed in a direction toward the steel plate support roll from the steel plate by deflector rolls.

19. The device of claim 17, wherein
the laser oscillator oscillates a single mode consecutive wave laser beam.

20. The device of claim 19, wherein
the optical system controls laser scanning speed to adjust a laser beam irradiation line interval to 2 to 30 mm in a rolling direction.
